# FASCICULE DE BREVET EUROPEEN

(11) **EP 3 431 329 B1**
(45) Date de publication et mention de la délivrance du brevet: **28.10.2020**
(21) Numéro de dépôt: 18181449.2
(22) Date de dépôt: 03.07.2018
(51) Int. Cl.: B60M 1/20

(54) **DISPOSITIF DE SUSPENSION D'UN PROFILÉ AÉRIEN DE CONTACT ÉLECTRIQUE AU-DESSUS D'UNE VOIE DE CIRCULATION D'UN VÉHICULE FERROVIAIRE**
VORRICHTUNG ZUM AUFHÄNGEN EINES ELEKTRISCHEN LUFTKONTAKTPROFILS ÜBER DER FAHRSTRECKE EINES SCHIENENFAHRZEUGS
SUSPENSION SYSTEM FOR AN AERIAL ELECTRICAL CONTACT PROFILE ABOVE A RAILWAY VEHICLE TRACK

(30) Priorité: 18.07.2017 FR 1756824
(43) Date de publication de la demande: 23.01.2019
(73) Titulaire: SNCF RESEAU, 93418 La Plaine Saint-Denis CEDEX (FR)
(72) Inventeur: MEZIANI, Imen, 94130 Nogent sur Marne (FR); MASSAT, Jean-Pierre, 77360 Vaires sur Marne (FR); EAV, Jhonni, 78700 Conflans Saint Honorine (FR); BAUDIN, Bernard, 75018 Paris (FR)
(74) Mandataire: Bringer, Mathieu

(56) Documents cités:
- DE-U1- 9 210 192
- FR-A1- 2 713 567
- GB-A- 1 326 092

## Description

### 1. Domaine technique de l'invention

L'invention concerne un dispositif de suspension d'un profilé aérien de contact, aussi connu sous la dénomination de caténaire rigide, au-dessus d'une voie de circulation d'un véhicule ferroviaire.

### 2. Arrière-plan technologique

Un véhicule ferroviaire, tel qu'un train, métro ou tramway, comprend une motrice électrique alimentée en courant par l'intermédiaire d'une caténaire qui comprend en général des supports verticaux soutenant un fil de contact qui s'étend au-dessus des rails de chemin de fer sur lesquels circule le véhicule. Les supports de la caténaire de voie sont espacés de quelques dizaines de mètres et supportent généralement un câble porteur auquel est suspendu le fil de contact par l'intermédiaire de pendules. Un pantographe est en outre installé sur le toit de la motrice électrique du véhicule ferroviaire pour capter le courant électrique circulant dans le fil de contact afin d'alimenter la motrice en énergie électrique permettant ainsi son déplacement sur les rails. Ce pantographe comprend typiquement une partie articulée portée par le toit de la motrice et un archet ou tête de captage destinée à recevoir le courant du fil de contact de la caténaire.

Sous des ouvrages d'art tels que des tunnels ou des ponts, il est fréquent de remplacer les pendules par des étriers qui présentent la forme d'un U inversé dont la base repose à cheval sur le câble porteur et dont les extrémités portent le fil de contact. Cet agencement permet d'éviter que le câble porteur ne se retrouve, lors du passage du véhicule ferroviaire, à une distance de l'ouvrage d'art inférieure à une distance dite d'isolement entre le câble porteur sous tension électrique et l'ouvrage relié électriquement à la masse, sous peine de produire un arc électrique pouvant entrainer une dégradation de la caténaire voire une disjonction électrique de celle-ci.

Enfin, pour les ouvrages d'art présentant des contraintes encore plus fortes en terme d'espace, dans la direction verticale définie par la gravité et/ou dans la direction horizontale (anciens tunnels, abords de voies ferrées délimitées par des murs, etc.), le fil de caténaire est remplacé par un profilé aérien de contact (aussi connu sous l'acronyme PAC) maintenu par une attache de profilé, elle même portée par un bras isolant, qui est ancré à une paroi latérale de l'ouvrage. Ce dispositif de suspension s'étend selon une direction globalement horizontale parallèle à la voie de manière à minimiser l'encombrement vertical dans les zones présentant des contraintes fortes.

L'invention concerne ces dispositifs de suspension destinés à des ouvrages présentant des contraintes verticales importantes. Le document FR2713567A1 divulgue un support de caténaire pour tunnel. GB1326092 décrit un système aérien d'alimentation de courant des caténaires.

### 3. Objectifs de l'invention

L'invention vise à fournir un dispositif de suspension d'un profilé aérien de contact électrique au-dessus d'une voie de chemin de fer.

L'invention vise en particulier à fournir, dans au moins un mode de réalisation, un tel dispositif de suspension d'un profilé aérien de contact électrique qui permet de simplifier les opérations de montage et/ou maintenance du dispositif sur un ouvrage.

L'invention vise aussi à fournir, dans au moins un mode de réalisation, un tel dispositif de suspension d'un profilé aérien de contact électrique qui permet de simplifier les opérations de réglage de la position du profilé aérien de contact électrique au-dessus d'une voie de chemin de fer.

L'invention vise aussi à fournir, dans au moins un mode de réalisation, un dispositif de suspension d'un profilé aérien de contact électrique qui présente une isolation améliorée par rapport aux dispositifs de l'art antérieur.

L'invention vise aussi à fournir, dans au moins un mode de réalisation, un dispositif de suspension d'un profilé aérien de contact électrique qui peut, une fois ancré sur un ouvrage, résister aux vibrations et à l'effet de souffle dû au passage d'un véhicule sur la voie au-dessus de laquelle le dispositif est installé.

L'invention vise aussi à fournir, dans au moins un mode de réalisation, un dispositif de suspension d'un profilé aérien de contact électrique qui peut résister aux attaques corrosives, à l'humidité et à la pollution.

L'invention vise aussi à fournir, dans au moins un mode de réalisation, un dispositif de suspension d'un profilé aérien de contact électrique, qui présente une durée de vie plus longue que les dispositifs de l'art antérieur.

### 4. Exposé de l'invention

Pour ce faire, l'invention concerne un dispositif de suspension d'un profilé aérien de contact électrique au-dessus d'une voie de chemin de fer traversant un ouvrage d'art comprenant des moyens d'ancrage du dispositif de suspension audit ouvrage d'art, des moyens d'attache du profilé aérien de contact, et un bras isolant s'étendant selon une direction, dite direction longitudinale, entre lesdits moyens d'attache et lesdits moyens d'ancrage.

Un dispositif de suspension d'un profilé aérien de contact électrique selon l'invention est caractérisé en ce qu'il comprend en outre un bras de réglage du dévers dudit profilé aérien de contact interposé entre ledit bras isolant et lesdits moyens d'attache du profilé aérien de contact.

Un dispositif de suspension selon l'invention comprend donc, en plus des organes connus des dispositifs de suspension de l'art antérieur (moyens d'ancrage du dispositif à un ouvrage d'art, bras isolant et moyens d'attache du profilé aérien de contact), un bras de réglage du dévers dudit profilé aérien de contact interposé entre le bras isolant et les moyens d'attache. Ce bras de réglage permet donc de régler le dévers du profilé aérien de contact de sorte qu'il puisse correspondre au dévers de la voie au dessus de laquelle il est agencé. Aussi, contrairement à l'art antérieur où le réglage du dévers était directement obtenu par un pivotement des moyens d'attache du profilé aérien de contact par rapport au bras isolant, l'invention isole ce réglage, ce qui permet d'avantage de flexibilité dans l'installation, la maintenance et le réglage d'un bras de suspension selon l'invention.

Avantageusement et selon l'invention, ledit bras de réglage du dévers comprend au moins une biellette - de préférence deux biellettes parallèles - dont une première extrémité est logée mobile en translation selon ladite direction longitudinale, dans une lumière ménagée dans ledit bras de réglage, et dont une seconde extrémité est montée pivotante selon un axe perpendiculaire à ladite direction longitudinale sur les moyens d'attache du profilé aérien de contact, de telle sorte que le déplacement de la première extrémité de cette biellette dans ladite lumière de guidage entraine le pivotement desdits moyens d'attache dudit profilé aérien de contact autour de l'axe formé par la deuxième extrémité de cette biellette, et donc le réglage du dévers dudit profilé aérien de contact suspendu par lesdits moyens d'attache.

Selon cette variante avantageuse, le réglage du dévers est obtenu par l'intermédiaire d'au moins une biellette - de préférence de deux biellettes - configurée pour pouvoir d'une part coulisser dans une lumière ménagée dans le bras de réglage et d'autre part pivoter par rapport aux moyens d'attache du profilé aérien de contact. Le déplacement de la biellette dans la lumière de guidage qui s'étend selon une direction longitudinale entraine le pivotement du profilé aérien de contact par rapport à un axe perpendiculaire à la direction longitudinale définie par le bras isolant. Cette direction longitudinale est perpendiculaire à la direction de déplacement des trains sur la voie ferrée au dessus de laquelle le dispositif de suspension est installé. En effet, de manière connue, un bras de suspension est ancré sur une paroi latérale d'un ouvrage d'art. Le pivotement du profilé aérien de contact s'opère donc selon un axe parallèle à la direction de déplacement des trains, ce qui permet bien de régler son dévers.

La lumière de guidage s'étend le long de la direction longitudinale et est délimitée par deux butées longitudinales, définissant chacune respectivement le dévers minimal et maximal des moyens d'attache du profilé aérien de contact, et donc du profilé aérien de contact.

Avantageusement et selon l'invention, lesdits moyens d'attache du profilé aérien de contact comprennent un support de montage de crapauds configuré pour recevoir latéralement au moins deux crapauds de fixation agencés latéralement de part et d'autre dudit support de montage, lesdits crapauds étant configurés pour former, une fois montés sur ledit support, des rainures latérales de réception et de suspension du profilé aérien de contact électrique

La fixation du profilé aérien de contact par l'intermédiaire de crapauds permet de faciliter les opérations de montage, de maintenance et de réglage du profilé aérien de contact. En outre, ces crapauds forment des rainures latérales de réception et de suspension du profilé aérien de contact dans lesquelles des ailettes du profilé aérien de contact peuvent être logées, soit par coulissement des ailettes du profilé aérien de contact dans les rainures ainsi formées, soit par fixation des crapauds au support de montage, une fois le profilé aérien de contact mis en butée contre le support de montage de telle sorte que les rainures viennent enserrer les ailettes du profilé aérien de contact.

Avantageusement et selon l'invention, les crapauds sont montés et solidarisés audit support de montage par des moyens d'assemblage réversible.

Un dispositif selon ce mode de réalisation facilite les opérations de maintenance en permettant un assemblage/séparation entre le profilé aérien de contact et le bras de suspension qui consiste à monter/démonter les crapauds du support de montage. Ainsi, lorsqu'un dispositif de suspension selon l'invention doit être remplacé ou apporté à un atelier de maintenance, il suffit de démonter les crapauds pour libérer le dispositif de suspension du profilé aérien de contact. Ce dernier est en pratique maintenu en position par d'autres dispositifs de suspension agencé au dessus de la voie au voisinage du dispositif qui doit être remplacé. Une fois le dispositif de suspension remplacé, il suffit de monter les crapauds au nouveau dispositif de suspension pour solidariser le dispositif au profilé aérien de contact.

Avantageusement et selon l'invention, ledit support de montage comprend, pour chaque crapaud, un trou taraudé agencé en regard d'un alésage formé dans ce crapaud, une fois ce crapaud en position sur ledit support, de manière à ce que le crapaud puisse être solidarisé avec ledit support de montage, par l'insertion d'une vis conformée au trou taraudé dudit support de montage, à travers l'alésage du crapaud et vissage dans le trou taraudé dudit support de montage agencé en regard.

Avantageusement et selon l'invention, lesdits moyens d'attache du profilé aérien de contact comprennent quatre crapauds agencés latéralement par paire de part et d'autre dudit support de montage.

Chacun de ces crapauds est par exemple fixé sur la base centrale par l'intermédiaire de moyens d'assemblage réversible du type vis-écrou ou tous moyens équivalents.

Avantageusement et selon l'invention, le bras de réglage est asymétrique par rapport à un plan horizontal.

Avantageusement et selon l'invention, le bras de réglage est asymétrique et est relié audit bras isolant par des moyens d'assemblage réversible de manière à pouvoir inverser l'orientation du bras de réglage par rapport audit bras isolant en cas de besoin.

Selon cette variante avantageuse, le bras de réglage peut présenter deux orientations verticales distinctes, chaque orientation modifiant la hauteur du profilé aérien de contact par rapport à la voie de circulation au-dessus de laquelle le dispositif de suspension est monté.

Avantageusement, un dispositif de suspension selon l'invention est formé en un alliage d'aluminium.

Un tel alliage, tel que par exemple l'alliage 6061, permet de réduire les phénomènes d'oxydation du bras de suspension.

L'invention concerne également un bras de suspension caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'un profilé aérien de contact d'un dispositif de suspension selon un mode de réalisation de l'invention,
- la figure 2 est une vue schématique en perspective d'un bras de suspension selon un mode de réalisation de l'invention,
- la figure 3 est une vue schématique en perspective d'un bras de suspension selon un mode de réalisation de l'invention, dans une position de dévers maximal,
- la figure 4 est une vue schématique en perspective d'un bras de suspension selon un mode de réalisation de l'invention, dans une position de dévers minimal,
- la figure 5 est une vue schématique en perspective d'un bras de suspension selon un mode de réalisation de l'invention, dans une position haute de dévers minimal,
- la figure 6 est une vue schématique de face d'un bras de réglage et des moyens d'attache d'un profilé aérien de contact selon un mode de réalisation de l'invention,
- la figure 7 est une vue schématique en perspective des moyens d'attache d'un profilé aérien de contact selon un mode de réalisation de l'invention,
- la figure 8 est une vue schématique en perspective d'un bras de réglage d'un dispositif de suspension selon un mode de réalisation de l'invention,
- la figure 9 est une vue schématique en perspective d'un crapaud de fixation d'un profilé aérien de contact d'un dispositif de suspension selon un mode de réalisation de l'invention.

### 6. Description détaillée d'un mode de réalisation de l'invention

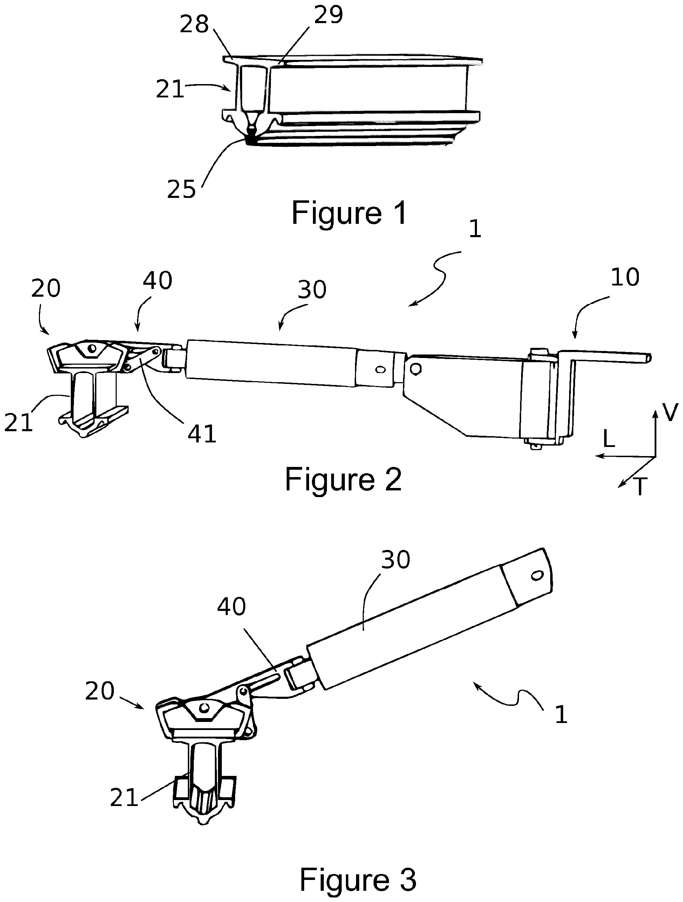

Sur les figures, les échelles et les proportions ne sont pas strictement respectées et ce, à des fins d'illustration et de clarté. Dans toute la description détaillée qui suit en référence aux figures, sauf indication contraire, chaque élément du bras de suspension est décrit tel qu'il est agencé lorsque le bras de suspension est fixé à une paroi latérale d'un ouvrage d'art en s'étendant au-dessus d'une voie de circulation d'un véhicule ferroviaire. Cet agencement est représenté notamment sur la figure 2.

En outre, les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur la figure 2. La direction longitudinale correspond à la direction principale du dispositif de suspension et notamment à la direction principale du bras isolant. La direction verticale est la direction définie par la gravité. La direction transversale est la direction perpendiculaire à la direction longitudinale et à la direction verticale.

La figure 1 est une vue schématique d'un profilé aérien 21 de contact. Ce profilé aérien de contact comprend des ailettes latérales 28, 29 destinées à venir se loger dans des rainures formées par le dispositif de suspension. La réalisation de ces rainures par un dispositif selon l'invention est décrite ultérieurement.

Le profilé aérien 21 de contact comprend également un fil de contact 25 électrique destiné à alimenter une motrice d'un véhicule ferroviaire par l'intermédiaire d'un pantographe installé sur le toit du véhicule ferroviaire lors de son passage sur la voie de circulation au-dessus de laquelle s'étend un dispositif de suspension selon l'invention.

La figure 2 illustre schématiquement un dispositif 1 de suspension de ce profilé aérien 21 de contact selon un mode de réalisation de l'invention. Ce dispositif 1 comprend des moyens d'ancrage 10 du dispositif de suspension à un ouvrage d'art. L'ouvrage d'art n'est pas représenté sur les figures à des fins de clarté. Les moyens d'ancrage 10 peuvent être de tous types et sont bien connus de l'homme du métier. Il peut par exemple s'agir d'une plaque de fixation qui est boulonnée dans la paroi latérale de l'ouvrage d'art. Bien entendu, d'autres moyens d'ancrage peuvent être mis en œuvre pour solidariser le dispositif de suspension à une paroi latérale d'un ouvrage d'art.

Sur les figures 3, 4 et 5, les moyens d'ancrage ne sont pas représentés à des fins de clarté.

Le dispositif 1 de suspension comprend aussi, et tel que représenté sur la figure 2, des moyens d'attache 20 du profilé aérien 21 de contact, un bras isolant 30 s'étendant selon une direction, dite direction longitudinale, et un bras de réglage 40 du dévers du profilé aérien de contact interposé entre le bras isolant 30 et lesdits moyens d'attache 20 du profilé aérien 21 de contact.

Le bras de réglage 40 comprend de préférence deux biellettes 41. Sur les figures, seule une biellette est visible, étant, entendu que l'autre biellette est agencée parallèlement à la biellette visible sur la face latérale opposée à la face visible du bras de réglage sur les figures.

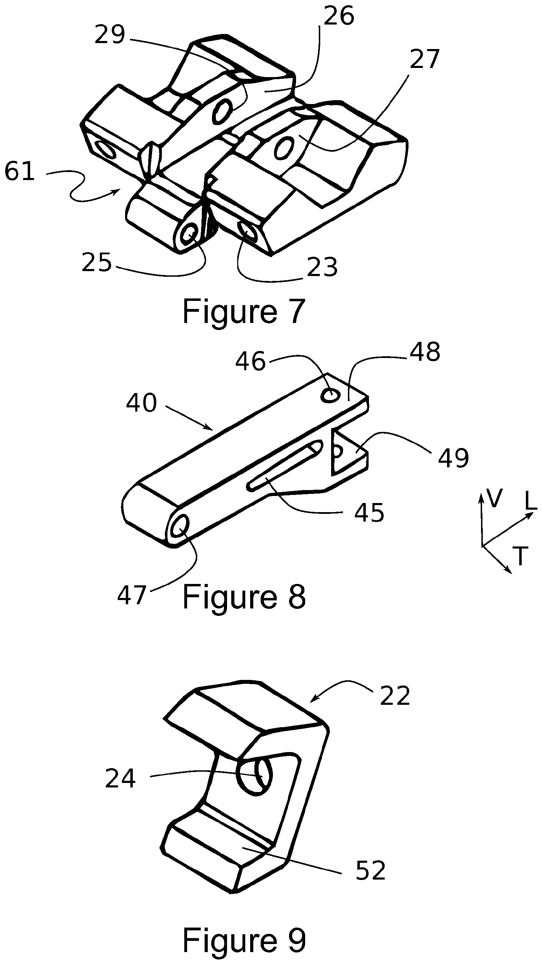

La figure 8 illustre le bras de réglage seul, sans les biellettes. Ce bras de réglage 40 comprend une lumière de guidage 45 dans laquelle une première extrémité des biellettes peut se déplacer. Ce bras de réglage comprend également un alésage 47 de liaison avec les moyens d'attache 20. Cet alésage 47 s'étend selon la direction transversale. Le bras de réglage comprend également deux ailes 48, 49 formant un logement de réception d'une extrémité longitudinale du bras isolant 30. Ces ailes 48, 49 comprennent chacune un alésage 46 de liaison avec le bras isolant 30 qui s'étend selon une direction verticale, une fois le dispositif de suspension ancré sur une paroi latérale d'un ouvrage d'art. L'alésage 46 et l'alésage 47 sont par exemple configurés pour recevoir des moyens de boulonnage pour assurer les liaisons avec respectivement le bras isolant 30 et les moyens d'attache 20.

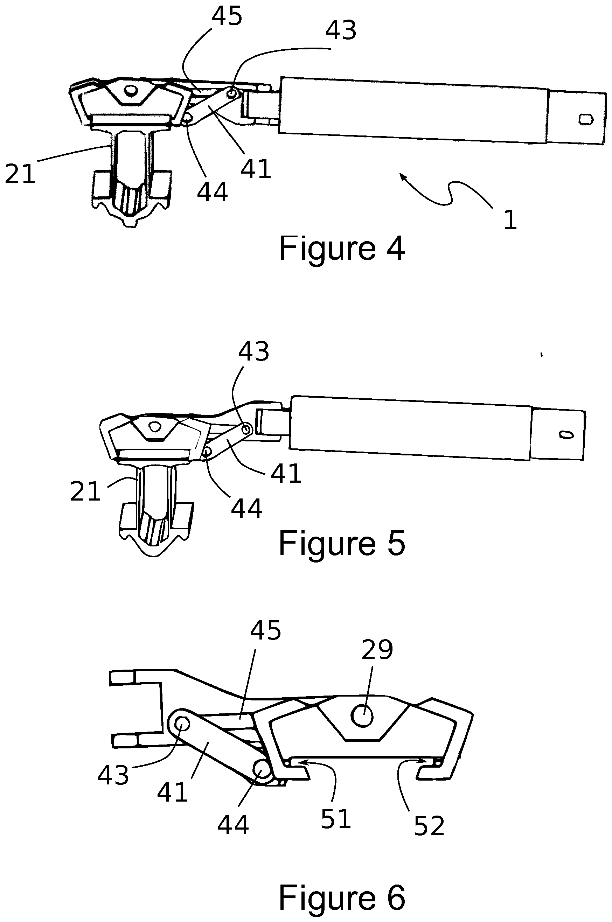

Tel que représenté sur la figure 6, les biellettes 41 présentent une première 43 logée mobile en translation dans la lumière de guidage 45 du bras de réglage, et une seconde extrémité 44 montée pivotante selon une direction transversale, perpendiculaire à ladite direction longitudinale, sur les moyens d'attache 20.

Aussi, le déplacement de la première extrémité 43 des biellettes 41 dans la lumière de guidage 45 entraine le pivotement des moyens d'attache 20 du profilé aérien de contact autour de l'axe formé par la deuxième extrémité 44.

La figure 3 illustre le dispositif 1 de suspension dans la position de dévers maximal. Dans cette position, l'angle formé entre la direction définie par le bras de réglage et la direction définie par l'axe de symétrie du profilé aérien de contact est maximal.

La figure 4 illustre le dispositif 1 de suspension dans la position de dévers minimal. Dans cette position, l'angle formé entre la direction définie par le bras de réglage et la direction définie par l'axe de symétrie du profilé aérien de contact est minimal.

Les figures 7 et 9 illustrent les organes formant les moyens d'attache 20 selon un mode de réalisation de l'invention.

Ces moyens d'attache comprennent un support de montage 61. Ce support de montage 61 comprend en outre un alésage 25 formé dans une portion en saillie et destiné à recevoir la deuxième extrémité 44 des biellettes 41. Ce support de montage 61 comprend également deux plaquettes 26, 27 s'étendant verticalement et délimitant entre elles un logement de réception d'une extrémité du bras de réglage. Ces plaquettes 26, 27 comprennent un alésage 29 traversant destiné à venir en regard de l'alésage 47 du bras de liaison. Des moyens de boulonnage peuvent donc lier mécaniquement le support de montage 61 et le bras de liaison 40 par ces alésages 47, 29.

Le support de montage 61 est destiné à porter des crapauds 22 de fixation agencés latéralement de part et d'autre du support de montage 61. Pour ce faire, le support de montage 61 comprend, pour chaque crapaud 22, un trou taraudé 23 agencé en regard d'un alésage 24 formé dans ce crapaud 22, une fois ce crapaud en position sur le support de montage 61. Ainsi, le crapaud 22 peut être solidarisé avec le support de montage 61, par l'insertion d'une vis conformée au trou taraudé 23 du support de montage 61, à travers l'alésage 24 du crapaud et vissage dans le trou taraudé 23 du support de montage agencé en regard.

Les crapauds forment, une fois monté sur le support de montage 21 des rainures 51, 52 latérales de réception et de suspension du profilé aérien de contact électrique. Ces rainures 51, 52 sont conformées aux ailettes latérales 28, 29 du profilé aérien de contact.

Un bras de réglage selon le mode de réalisation des figures est asymétrique par rapport à un plan horizontal. Cette asymétrie se traduit par un décalage de l'alésage 47 de liaison avec les moyens d'attache 20 du profilé aérien de contact par rapport aux organes formant les moyens de fixation du bras de réglage au bras isolant (c'est à dire, les ailes 48, 49 et l'alésage 46). Ainsi, selon l'orientation verticale du bras de réglage, l'axe de liaison avec les moyens d'attache est plus ou moins haut par rapport au sol. Il est alors possible de choisir, lors du montage du dispositif 1 de suspension, l'une ou l'autre des orientations verticales du bras de réglage, chaque orientation présentant une hauteur du suspension distincte du profilé aérien de contact.

La figure 4 illustre le dispositif 1 de suspension, en position de dévers minimal, et en position basse, définie par une première orientation verticale du bras de réglage.

La figure 5 illustre le dispositif 1 de suspension, en position de dévers minimal, et en position haute, définie par une deuxième orientation verticale du bras de réglage.

Un dispositif 1 de suspension selon l'invention peut être réalisé en tous types de matériaux. De préférence, le dispositif 1 de suspension est formé en un alliage d'aluminium, tel que par exemple un alliage connu sous la référence 6061, ce qui permet de réduire l'oxydation du dispositif de suspension, et améliore donc sa durée de vie.

L'invention ne se limite pas seulement au mode de réalisation décrit en lien avec les figures. En particulier, un dispositif de suspension, s'il est principalement dédié à une installation sur une paroi latérale d'un ouvrage d'art présentant des contraintes fortes en terme d'encombrement, il peut également être mis en œuvre sur d'autres tronçons de voies selon les besoins. En particulier, un bras de suspension selon l'invention facilitant le réglage du dévers du profilé aérien de contact, il peut être mis en œuvre pour toutes portions de voie nécessitant un réglage précis et simplifié du dévers du fil de contact. Il peut également être mis en œuvre dans les ateliers de maintenance des véhicules ferroviaires.

## Revendications

1. Dispositif (1) de suspension d'un profilé aérien (21) de contact électrique au-dessus d'une voie de circulation d'un véhicule ferroviaire traversant un ouvrage d'art comprenant des moyens d'ancrage (10) du dispositif de suspension (1) audit ouvrage d'art, des moyens d'attache (20) du profilé aérien (21) de contact, un bras isolant (30) s'étendant selon une direction, dite direction longitudinale, entre lesdits moyens d'attache (20) et lesdits moyens d'ancrage (10), un bras de réglage (40) du dévers dudit profilé aérien (21) de contact interposé entre ledit bras isolant (30) et lesdits moyens d'attache (20) du profilé aérien (21) de contact, **caractérisé en ce qu'**il comprend en outre au moins une biellette (41) dont une première extrémité (43) est logée mobile en translation selon ladite direction longitudinale, dans une lumière (45) de guidage ménagée dans ledit bras de réglage, et dont une seconde extrémité (44) est montée pivotante selon un axe perpendiculaire à ladite direction longitudinale sur les moyens d'attache (20) du profilé aérien de contact, de telle sorte que le déplacement de la première extrémité de cette biellette (41) dans ladite lumière de guidage entraine le pivotement desdits moyens d'attache dudit profilé aérien de contact autour de l'axe formé par la deuxième extrémité de cette biellette (41), et donc le réglage du dévers dudit profilé aérien de contact suspendu par lesdits moyens d'attache.

2. Dispositif (1) selon la revendication 1, **caractérisé en ce que** lesdits moyens d'attache (20) du profilé aérien de contact comprennent un support de montage (61) de crapauds configuré pour recevoir latéralement au moins deux crapauds (22) de fixation agencés latéralement de part et d'autre dudit support de montage (61), lesdits crapauds (22) étant configurés pour former, une fois montés sur ledit support, des rainures latérales de réception et de suspension du profilé aérien de contact électrique.

3. Dispositif (1) selon la revendication 2, **caractérisé en ce que** lesdits crapauds (22) sont montés et solidarisés audit support de montage (61) par des moyens d'assemblage réversible.

4. Dispositif (1) selon la revendication 3 **caractérisé en ce que** ledit support de montage (61) comprend, pour chaque crapaud (22), un trou taraudé (23) agencé en regard d'un alésage (24) formé dans ce crapaud (22), une fois ce crapaud en position sur ledit support de montage (61), de manière à ce que le crapaud (22) puisse être solidarisé avec ledit support de montage (61), par l'insertion d'une vis conformée au trou taraudé (23) dudit support de montage (61), à travers l'alésage (24) du crapaud et vissage dans le trou taraudé (23) dudit support de montage agencé en regard.

5. Dispositif (1) selon l'une des revendications 2 à 4, **caractérisé en ce que** lesdits moyens d'attache du profilé aérien de contact comprennent quatre crapauds (22) de fixation agencés latéralement par paire de part et d'autre dudit support de montage (61).

6. Dispositif (1) selon l'une des revendications 1 à 5, **caractérisé en ce que** ledit bras de réglage (40) est asymétrique par rapport à un plan horizontal.

7. Dispositif (1) selon la revendication 6, **caractérisé en ce que** ledit bras de réglage (40) est relié audit bras isolant (30) par des moyens d'assemblage réversible de manière à pouvoir inverser l'orientation verticale du bras de réglage par rapport audit bras isolant en cas de besoin.

8. Dispositif (1) selon l'une des revendications 1 à 7, **caractérisé en ce qu'**il est formé en un alliage d'aluminium.

## Patentansprüche

1. Einrichtung (1) zum Aufhängen eines elektrischen Über-Kopf-Kontaktabschnittes (21) über einer Verkehrsspur eines Schienenfahrzeugs, die durch einen technischen Aufbau geht, der umfasst, Mittel zur Verankerung (10) der Aufhänge-Einrichtung (1) an den technischen Aufbau, Befestigungsmittel (20) des Über-Kopf-Kontaktabschnittes (21), einen Isolierarm (30), der sich entlang einer als Längsrichtung bezeichneten Richtung zwischen dem Befestigungsmittel (20) und dem Verankerungsmittel (10) erstreckt, einen Arm (40), der zum Anpassen der Neigung des Über-Kopf-Kontaktabschnittes (21) zwischen dem Isolierarm (30) und dem Befestigungsmittel (20) des Über-Kopf-Kontaktabschnittes (21) eingefügt ist,
**dadurch gekennzeichnet, dass** die Einrichtung weiter mindestens umfasst, eine Verbindungsstange (41), deren erstes Ende (43) eingehüllt ist, um in Versetzung entlang der Längsrichtung in einer in dem Anpassungsarm vorgesehenen Führungsaussparung (45) bewegbar zu sein, und deren zweites Ende (44) derart befestigt ist, um eine Achse zu schwenken, die senkrecht zu der Längsrichtung auf dem Befestigungsmittel (20) des Über-Kopf-Kontaktabschnitt ist, so dass die Bewegung des ersten Endes der Verbindungsstange (41) in der Führungsaussparung das Schwenken des Befestigungsmittels des Über-Kopf-Kontaktabschnittes um die durch das zweite Ende der Stange (41) ausgebildete Achse und dadurch die Anpassung der Neigung des durch das Befestigungsmittel aufgehängten Über-Kopf-Kontaktabschnittes bewirkt.

2. Einrichtung (1) nach Anspruch 1, **dadurch gekennzeichnet, dass** das Befestigungsmittel (20) des Über-Kopf-Kontaktabschnittes eine Klemmenbefestigungsstütze (61) umfasst, die ausgestaltet ist, seitlich mindestens zwei Befestigungsklemmen (22) aufzunehmen, die auf beiden Seiten der Befestigungsstütze (61) seitlich vorgesehen ist, worin die Klemmen (22) ausgestaltet sind, einmal auf der Stütze befestigt, seitliche Rillen zum Aufnehmen und Aufhängen des elektrischen Über-Kopf-Kontaktabschnittes auszubilden.

3. Einrichtung (1) nach Anspruch 2, **dadurch gekennzeichnet, dass** die Klemmen (22) durch reversible Montagemittel an der Befestigungsstütze (61) befestigt und eingelenkt sind.

4. Einrichtung (1) nach Anspruch 3, **dadurch gekennzeichnet, dass** die Befestigungsstütze (61) für jede Klemme (22) umfasst, eine Gewindeloch (23), das einer (24) in der Klemme (22) ausgebildeten Bohrung gegenüberliegend vorgesehen ist, wobei sobald die Klemme in einer Position auf der Befestigungsstütze (61) ist, die Klemme (22) an der Befestigungsstütze (61) durch Einsetzen einer dem Gewindeloch (23) der Befestigungsstütze (61) entsprechenden Schraube durch die Bohrung (24) der Klemme und Schrauben in das Gewindeloch (23) der gegenüberliegen vorgesehenen Befestigungsstütze eingelenkt werden kann.

5. Einrichtung (1) nach einem der Ansprüche 2 bis 4, **dadurch gekennzeichnet, dass** die Mittel zum Befestigen des Über-Kopf-Kontaktabschnittes vier Befestigungsklemmen (22) umfassen, die in Paaren auf jeder Seite der Befestigungsstütze (61) seitlich angeordnet sind.

6. Einrichtung (1) nach einem der Ansprüche 1 bis 5, **dadurch gekennzeichnet, dass** der Anpassungsarm (40) in Bezug zu einer horizontalen Ebene asymmetrisch ist.

7. Einrichtung (1) nach Anspruch 6, **dadurch gekennzeichnet, dass** der Anpassungsarm (40) durch reversible Montagemittel mit dem Isolierarm (30) verbunden ist, um die vertikale Orientation des Anpassungsarmes in Bezug zu dem Isolierarm wenn erforderlich umkehren zu können.

8. Einrichtung (1) nach einem der Ansprüche 1 bis 7, **dadurch gekennzeichnet, dass** diese aus einer Aluminiumlegierung gefertigt ist.

## Claims

1. Device (1) for suspending an overhead electrical contact section (21) above a traffic lane of a railway vehicle passing through an engineering structure comprising anchoring means (10) of the suspension device (1) to said engineering structure, attachment means (20) of overhead contact section (21), an insulating arm (30) extending along a direction, called the longitudinal direction, between said attachment means (20) and said anchoring means (10), an arm (40) for adjusting the inclination of said overhead contact section (21) interposed between said insulating arm (30) and said attachment means (20) of the overhead contact section (21), **characterized in that** it further comprises at least one connecting rod (41), a first end (43) of wich is housed so as to be movable in translation along said longitudinal direction, in a guide slot (45) provided in said adjustment arm, and a second end (44) of which is mounted so as to pivot around a perpendicular axis to said longitudinal direction on the attachment means (20) of the overhead contact section, so that the movement of the first end of this connecting rod (41) in said guide slot causes the pivoting of said attachment means of said overhead contact section around the axis formed by the second end of this rod (41), and therefore the adjustment of the inclination of said overhead contact section suspended by said attachment means.

2. Device (1) according to claim 1, **characterized in that** said attachment means (20) of the overhead contact section comprise a clamp mounting support (61) configured to laterally receive at least two fixing clamps (22) laterally arranged on both side of said mounting support (61), said clamps (22) being configured to form, once mounted on said support, lateral grooves for receiving and suspending the overhead electrical contact section.

3. Device (1) according to claim 2, **characterized in that** said clamps (22) are mounted and joined to said mounting support (61) by reversible assembly means.

4. Device (1) according to claim 3, **characterized in that** said mounting support (61) comprises, for each clamp (22), a threaded hole (23) arranged opposite a bore (24) formed in this clamp (22), once this clamp is in position on said mounting support (61), so that the clamp (22) can be joined to said mounting support (61), by inserting a screw conforming to the threaded hole (23) of said mounting support (61), through the bore (24) of the clamp and screwing into the threaded hole (23) of said oppositely arranged mounting support.

5. Device (1) according to one of claims 2 to 4, **characterized in that** said means for attaching the overhead contact section comprise four fixing clamps (22) arranged laterally in pairs on either side of said mounting support (61).

6. Device (1) according to one of claims 1 to 5, **characterized in that** said adjustment arm (40) is asymmetric with respect to an horizontal plane.

7. Device (1) according to claim 6, **characterized in that** said adjustment arm (40) is connected to said insulating arm (30) by reversible assembly means so as to be able to reverse the vertical orientation of the adjustment arm with respect to said insulating arm if necessary.

8. Device (1) according to one of claims 1 to 7, **characterized in that** it is made of an aluminum alloy.
